# EUROPÄISCHE PATENTSCHRIFT

(11) **EP 3 335 930 B1**
(45) Veröffentlichungstag und Bekanntmachung des Hinweises auf die Patenterteilung: **08.07.2020**
(21) Anmeldenummer: 17203460.5
(22) Anmeldetag: 24.11.2017
(51) Int. Cl.: B60N 2/50

(54) **FAHRZEUGKABINE ODER FAHRZEUGSITZ MIT HÖHENVERSTELLEINRICHTUNG**
VEHICLE CABINS OR CAR SEAT WITH DEVICE FOR ADJUSTING THE HEIGHT
CABINE DE VÉHICULE AUTOMOBILE OU SIÈGE DE VÉHICULE AUTOMOBILE POURVUS DE DISPOSITIF DE RÉGLAGE DE HAUTEUR

(30) Priorität: 16.12.2016 DE 102016124696
(43) Veröffentlichungstag der Anmeldung: 20.06.2018
(73) Patentinhaber: GRAMMER AG, 92224 Amberg (DE)
(72) Erfinder: Lorey, Alexander, 93142 Maxhütte-Haidhof (DE)
(74) Vertreter: Hannke, Christian

(56) Entgegenhaltungen:
- EP-A2- 2 583 861
- DE-A1-102014 004 863

## Beschreibung

Die Erfindung betrifft eine Fahrzeugkabine oder einen Fahrzeugsitz mit einer Höhenverstelleinrichtung gemäß dem Oberbegriff des Patentanspruches 1.

Fahrzeugkabinen oder Fahrzeugsitze, welche vor allem in Nutzfahrzeugen verbaut sind, müssen heutzutage meist mehrere Anforderungen erfüllen. Vor allem sollen sie dem Fahrzeuginsassen einen möglichst hohen Komfort und ein hohes Maß an individuellen Einstellmöglichkeiten bieten. Dafür sind viele Nutzfahrzeugsitze beispielsweise zwischen einem Oberteil und einem Unterteil mit einem höhenverstellbaren Scherengestell mit zwei Scherenarmen und einer pneumatischen Vertikalfederung ausgestattet. Die folgenden Erläuterungen gelten jedoch ebenso für ein Oberteil und ein Unterteil einer Fahrzeugkabine.

Generell ist bekannt, eine Druckluftfeder am Scherengestell so anzuordnen, dass sie beispielsweise entweder zwischen beiden Scherenarmen oder zwischen einem der Scherenarme und dem Unterteil angeordnet ist und sich am Scherengestell abstützt. Diese Druckluftfeder ist hinsichtlich der in ihr befindlichen Luftmenge einstellbar. Insbesondere können Schwingungsbewegungen des Scherengestells auf eine Vorrichtung zur Einstellung der Luftmenge übertragen werden, um die Schwingungen abklingen zu lassen.

Aus dem Stand der Technik ist eine automatische Gewichtsverstellung für Fahrzeugsitze beispielsweise anhand der Druckschriften DE 10 2005 051 228 B4 und DE 10 2007 032 897 A1 bekannt. Dabei ist vorgesehen, dass der Sitz unabhängig von Fahrergewicht automatisch in eine optimale Höhe, beispielsweise in die Mitte des Schwingungsbereichs, fährt. Allerdings ist hier keine individuelle Anpassung der Sitzhöhe gezeigt. Ein Fahrzeugsitz mit einer Höhenverstellvorrichtung nach Oberbegriff des Anspruchs 1 ist aus der DE102014004863 bekannt.

Die vorliegende Erfindung stellt eine Weiterentwicklung obiger Ausführungen dar. Aufgabe der vorliegenden Erfindung ist es daher, einen Fahrzeugsitz oder eine Fahrzeugkabine zu entwickeln, welche einerseits eine gute Schwingungsdämpfung und andererseits eine Höhenverstellung des Fahrzeugsitzes gewährleisten.

Gelöst wird diese Aufgabe durch eine Fahrzeugkabine oder einen Fahrzeugsitz mit einem Oberteil und einem Unterteil, welche zueinander mittels mindestens eines höhenverstellbaren Scherengestells mit zwei um eine gemeinsame Achse schwenkbaren Scherenarmen und mindestens einer Luftfeder mit einer veränderbaren Luftmenge vertikal federnd gelagert sind, wobei mittels eines mit dem Scherengestell mechanisch wirkverbundenen Übertragungselements Bewegungen des Scherengestells auf ein Schaltelement zur Steuerung der Luftmenge der Luftfeder übertragbar sind, und wobei eine Höhenverstelleinrichtung für das Scherengestell, umfassend ein manuell betätigbares Steuerhebelelement und ein damit mechanisch wirkverbundenes Führungselement, vorgesehen ist, wobei mittels des Führungselements das Schaltelement um eine erste Rotationsachse verschwenkbar ist und das Übertragungselement um die erste Rotationsachse zum Schaltelement gegenläufig verschwenkbar ist, um eine zwischen zwei zur Steuerung einer Luftmenge der Luftfeder vorgesehenen Schaltern angeordnete Neutralposition des Schaltelements zu ändern.

Die vorliegende Erfindung bietet also eine Möglichkeit, mittels einer Höhenverstellung in den optimalen Schwingungsbereich eine individuelle Einstellung der Sitzhöhe durchzuführen. Die Sitzhöhe bleibt dabei vorteilhaft in der eingestellten Position, unabhängig vom Fahrergewicht. Erzielt wird dies durch eine direkte Einstellung der Neutralposition mit einer winkelverstellbaren Einheit.

Dadurch, dass eine gegenläufige Relativbewegung des Schaltelements und des Übertragungselements möglich ist, ist eine Höhenverstellung des Fahrzeugsitzes möglich. Dazu betätigt ein Sitzinsasse beispielsweise das Steuerhebelelement für eine Höhenverstellung des Fahrzeugsitzes nach oben, wodurch das Führungselement mitbewegt wird. Dieses ist vorteilhaft derart mechanisch wirkverbunden mit dem Schaltelement und dem Übertragungselement, dass eine gegenläufige Bewegung beider Komponenten erzielt wird.

Analog dazu kann auch das Übertragungselement in seiner ursprünglichen Position verbleiben und die Relativbewegung zwischen Führungselement und Schaltelement stattfinden. Von der Geometrie der Relativbewegungen zwischen dem Schaltelement, dem Führungselement und dem Übertragungselement stellt dies nämlich keinen Unterschied dar.

Durch die Verschwenkung des Schaltelements nimmt dieses nun vorteilhaft eine Position ein, in der es einen der Schalter (im genannten Fall den für die Verstellung des Fahrzeugsitzes nach oben) betätigen kann. Die Luftmenge der Luftfeder wird also verändert; vorliegend wird sie stärker befüllt. Die sich vorteilhaft gegen das Scherengestell abstützende Luftfeder drückt also auf zumindest einen der Scherenarme und lenkt diesen um die gemeinsame Achse der Scherenarme aus, so dass sich in Fahrzeugsitzhöhenrichtung gegenüberliegende Enden der Scherenarme des Scherengestells vorliegend weiter voneinander entfernen. Der Abstand zwischen Oberteil und Unterteil und damit die Sitzhöhe werden also erhöht.

Die neue Position des Scherengestells wird auf das Übertragungselement übertragen. Dieses dreht sich mit und überträgt die Bewegung auf das Schaltelement, welches daraufhin eine neue Neutralposition einnimmt.

Es versteht sich, dass analog zu einer Erhöhung der Sitzhöhe diese auch erniedrigt werden kann, indem das Schaltelement den anderen der beiden Schalter betätigt, mittels welchem die Luftmenge erniedrigt werden kann. Aus der Luftfeder entweicht somit Luft, woraufhin das Scherengestell sich nach unten bewegt.

Im Sinne der Erfindung wird unter Neutralposition des Schaltelements eine Drehstellung des Schaltelements verstanden, welche zwischen einer ersten Schaltposition zur Betätigung des ersten Schalters und einer zweiten Schaltposition zur Betätigung des zweiten Schalters angeordnet ist. Vorteilhaft ist die Neutralposition des Schaltelements genau mittig zwischen den beiden Schaltpositionen angeordnet, so dass beispielsweise ausgehend von der Neutralstellung zur Erreichung einer der beiden Schaltpositionen in beide Drehrichtungen der gleiche Drehwinkel zurückgelegt werden muss.

Vorteilhaft sind das Schaltelement, das Steuerhebelelement, das Führungselement und/ oder das Übertragungselement einteilig ausgestaltet.

Um eine möglichst sichere mechanische Führung der genannten Komponenten zu gewährleisten, hat es sich bewährt, wenn das Führungselement über eine an einem ersten Ende des Führungselements angeordnete und zur ersten Rotationsachse parallelen zweiten Rotationsachse mit dem Steuerhebelelement schwenkbar verbunden ist und/ oder an einem zweiten Ende ein sich in Richtung der zweiten Rotationsachse erstreckendes erstes und zweites Nutensteinelement aufweist.

Das Führungselement ist also in Bezug auf die erste Rotationsachse, welche auch als Hauptrotationsachse bezeichnet werden kann, exzentrisch gelagert. Mittels des ersten Endes des Führungselements ist bei Betätigung des Steuerhebelelements also ein Kreisbogenabschnitt beschreibbar. Über den dem Abstand zwischen der ersten und der zweiten Rotationsachse entsprechenden und damit vorbestimmbaren Radius dieses Kreisbogenabschnitts und über die Länge dieses Kreisbogenabschnitts, welche über den Verschwenkweg des Steuerhebelelements bestimmbar ist, ist also vorteilhaft bestimmbar, in welchem Maße die Relativbewegung zwischen dem Führungselement und dem Schaltelement stattfindet.

Gleichzeitig ist es vorteilhaft, wenn das erste Nutensteinelement in einer ersten bogenförmigen Nut des Übertragungselements und das zweite Nutensteinelement in einer zweiten bogenförmigen Nut des Schaltelements führbar sind, wobei eine Krümmung der ersten Nut gegenläufig zu einer Krümmung der zweiten Nut angeordnet ist.

Diese Ausgestaltung sorgt für eine sichere mechanische Führung zwischen dem Führungselement auf der einen Seite sowie dem Übertragungselement und dem Schaltelement auf der anderen Seite. Gleichzeitig ist beispielsweise gewährleistet, dass über die Form und die Länge der Nut die Relativbewegung gesteuert werden kann. So ist über eine bogenförmige Nut wie beschrieben eine reine Drehbewegung des Übertragungselements und des Schaltelements gewährleistet.

Gleichzeitig kann beispielsweise die bogenförmige Nut des Übertragungselements und/ oder des Schaltelements die Form eines Kreisbogenabschnitts aufweisen, wobei zwischen einem ersten und einem zweiten Endpunkt des Kreisbogenabschnitts, welche die Nutenden darstellen, ein definierter Winkel ausgestaltet ist. Beispielsweise weist dieser Winkel einen Betrag aus einem Bereich von 5 bis 15° auf. In diesem Fall weist die Nut mittels ihrer Nutenden also eine Begrenzungseinrichtung für die Bewegung der Nutensteinelemente auf.

Um eine möglichst effiziente Übertragung der Bewegungen oder auch Schwingungen des Scherengestells auf das Übertragungselement und damit auf das Schaltelement übertragen zu können, ist es vorteilhaft, wenn ein Koppelstangenelement mit einem ersten Ende mit einem der Scherenarme des Scherengestells und/ oder mit einem zweiten Ende mittels eines Drehfederelements mit dem Übertragungselement mechanisch wirkverbunden ist. Es hat sich dabei als vorteilhaft herausgestellt, wenn ein Verhältnis zwischen einer Bewegung des Scherenarms und einer Bewegung des Koppelstangenelements einem Übersetzungsverhältnis von 1 zu 11 entspricht. Das Drehfederelement kann gemäß einer bevorzugten Variante als Schenkelfederelement ausgestaltet sein.

Das Drehfederelement oder auch Torsionsfederelement ist mit einem ersten Ende mit dem Koppelstangenelement und mit einem zweiten Ende mit dem Übertragungselement verbunden. Bevorzugt ist es hinsichtlich seiner Mittelachse fluchtend zur ersten Rotationsachse ausgerichtet. Es sorgt dafür, dass vom Scherenarm über das Koppelstangenelement ein Drehmoment an das Übertragungselement weitergeleitet wird. Andererseits wird die Bewegung des ersten Endes des Drehfederelements und die damit eingeleitete Energie zumindest teilweise innerhalb des Drehfederelements als Rotationsenergie gespeichert. Über eine geeignete Auslegung des Drehfederelements lässt sich also eine Überlastung der beteiligten Komponenten verhindern.

Eine vorteilhafte Ausgestaltung des Übertragungselements sieht vor, dass das Übertragungselement an einem ersten Ende einen Nutabschnitt mit der ersten Nut und/ oder an einem zweiten Ende einen mit einem Zahnrad einer Bremseinheit mechanisch wirkverbindbaren außenverzahnten Abschnitt und einen Abschnitt zur Lagerung eines Endes des Drehfederelements aufweist, wobei zwischen den beiden Enden des Übertragungselements ein im Wesentlichen hohlzylinderförmiger Abschnitt angeordnet ist, welcher konzentrisch zur ersten Rotationsachse anordenbar ist.

Die Bremseinheit dient dazu, dass geringe Schwingungen des Scherengestells ausgebremst und nicht an das Schaltelement übertragen werden. Ob eine Schwingung als gering eingestuft wird, hängt dabei vorteilhaft nicht von ihrer Amplitude, sondern von ihrer Schwingungsdauer ab. Dabei gilt beispielsweise: bei einer Schwingungsdauer, welche unterhalb eines bestimmten Grenzwerts liegt, erfolgt keine Übertragung der Schwingung, sondern ein Abbremsen der Schwingung durch die Bremseinheit.

Damit der Sitzinsasse die Höhenverstelleinrichtung möglichst komfortabel bedienen kann, hat es sich in der Praxis als vorteilhaft herausgestellt, wenn das Steuerhebelelement an einer Vorderseite des Oberteils angeordnet und manuell um die erste Rotationsachse verschwenkbar ist. Diese Vorderseite entspricht beispielsweise einem Bereich am Sitzteil, welcher in Fahrzeugsitzbreitenrichtung mittig und in Fahrzeugsitzhöhenrichtung unterhalb eines Sitzteilpolsterabschnitts des Sitzteils angeordnet ist. Beispielsweise ist der Bereich zwischen den Knien des Sitzinsassen angeordnet.

Eine vorteilhafte Ausgestaltung des Steuerhebelelements sieht vor, dass das Steuerhebelelement im Wesentlichen in Form eines Segments eines schalenförmigen Hohlzylinders mit sich gegenüberliegenden Stirnflächenabschnitten ausgestaltet ist, wobei jeweils eine Bohrung in den Stirnflächenabschnitten konzentrisch zur ersten Rotationsachse anordenbar ist, und/ oder dass an einer Außenseite des Steuerhebelelements ein senkrecht zur ersten Rotationsachse angeordnetes Griffelement angeordnet ist. Vorteilhaft erstreckt sich das Segment des Hohlzylinders in Bezug auf dessen Mittelachse über einen Bereich von 135° bis 165°, vorteilhaft über 150°.

Die beschriebene Ausgestaltung gewährleistet zum einen eine sehr leichte und kostengünstige Ausgestaltung des Steuerhebelelements, da es in Schalenform vorliegt, mithin zwar in Bezug auf seine Abmessungen die Form eines Segments eines schalenförmigen Hohlzylinders abbildet, jedoch nur eine geringe und vorteilhaft möglichst konstante Wanddicke aufweist.

Zum anderen ist durch die Anbindung des Griffelements an die zylindrische Fläche des Segments eine möglichst günstige Krafteinleitung beim Betätigen des Steuerhebelelements gewährleistet, was die Versagenswahrscheinlichkeit des Steuerhebelelements, beispielsweise durch ein Abbrechen des Griffelements, reduziert.

Eine vorteilhafte Ausgestaltung des Schaltelements sieht vor, dass ausgehend von der Neutralposition des Schaltelements mittels einer Verschwenkbewegung des Schaltelements um die erste Rotationsachse in eine erste Richtung der erste Schalter zur Ansteuerung einer Luftzuführeinrichtung der Luftfeder und mittels einer Verschwenkbewegung des Schaltelements um die erste Rotationsachse in eine zweite Richtung der zweite Schalter zur Ansteuerung einer Luftabführeinrichtung der Luftfeder betätigbar ist.

Beispielsweise umfasst die Luftzuführeinrichtung einen Kompressor und/ oder die Luftabführeinrichtung ein Ablassventil. Es versteht sich, dass weiterhin Signalleitungen und/ oder Antriebe vorgesehen sein können.

Vorzugsweise ist zumindest einer der Schalter, bevorzugt beide, als Druckschalter ausgestaltet, das heißt, dass ein auf ein Betätigungselement des Schalters ausgeübter Druck in eine Bewegung des Betätigungselements von einer ersten in eine zweite Position übertragen wird. Durch diese Positionsänderung wird ein Stromkreis geschlossen, welcher entweder der Luftzuführeinrichtung oder der Luftabführeinrichtung zugeordnet ist. Beim Beenden des Ausübens des Drucks geht das Betätigungselement beispielsweise federgestützt wieder in die erste Position zurück, wodurch der Stromkreis wieder unterbrochen ist.

Denkbar sind auch Ansteuerungsvarianten, welche pneumatisch, elektrisch und/ oder mechanisch ausgestaltet sind. Beispielsweise ist auch der Einsatz elektrischer Ventile denkbar.

Weiter ist es vorteilhaft, wenn mittels einer ersten Schaltfläche des Schaltelements der erste Schalter und mittels einer zweiten Schaltfläche des Schaltelements der zweite Schalter betätigbar ist, wobei an einem zweiten Ende des Schaltelements ein Nutabschnitt mit der zweiten Nut angeordnet ist, wobei zwischen dem zweiten Ende und einem ersten Ende des Schaltelements ein im Wesentlichen hohlzylinderförmiger Abschnitt angeordnet ist, welcher konzentrisch zur ersten Rotationsachse anordenbar ist, und/ oder wobei die erste Schaltfläche sich zwischen dem ersten und dem zweiten Ende des Schaltelements und die zweite Schaltfläche am ersten Ende sich senkrecht zu einer Ebene, innerhalb der die zweite Nut sich erstreckend angeordnet ist, erstreckend angeordnet ist.

Vorteilhaft ist der zylinderförmige Abschnitt des Schaltelements zwischen den Stirnflächenabschnitten des Steuerhebelelements angeordnet. Damit ist eine möglichst kompakte Bauweise der Anordnung gewährleistet.

Dadurch, dass beide Schaltflächen auf einem einzigen Element angeordnet sind, ist eine ungewollte Verschiebung zwischen den Positionen der beiden Schaltflächen weitestgehend reduziert. Die Anordnung des Nutabschnitts mit der zweiten Nut relativ zur zweiten Schaltfläche erhöht ebenfalls den Kompaktheitsgrad der Anordnung.

Vorteilhaft ist zumindest einer der Schalter, bevorzugt beide Schalter so angeordnet, dass das Schaltelement in seiner Neutralstellung zumindest am Betätigungselement des Schalters kontaktierend anliegt, ohne dieses bereits zu betätigen. Vorteilhaft führt dann eine geringfügige Verschwenkung des Schaltelements, beispielsweise um einen Winkel aus einem Bereich von 0,5° bis 2°, bereits zu einer Betätigung des Betätigungselements bzw. des Schalters.

Es hat sich in der Praxis bewährt, die Anordnung so auszulegen, dass das Griffelement um die erste Rotationsachse um einen Winkel von +/- 25° verschwenkbar ist und/ oder mittels der Höhenverstelleinrichtung eine Höhenverstellung des Scherengestells von maximal +/- 20 mm durchführbar ist.

So ist gewährleistet, dass der Sitzinsasse lediglich eine einfache und kurze Verschwenkbewegung auslösen muss. Andererseits kann das Steuerhebelelement so in den Fahrzeugsitz integriert werden, dass die Mittelachsen der Bohrungen der Stirnflächenabschnitte auf einer Außenseite des Sitzes angeordnet sind und somit so wenig wie möglich zu einer Verbreiterung der Außenkontur des Sitzes beitragen.

Vorteilhaft ist zwischen den Bohrungen der Stirnfläche oder den hohlzylinderförmigen Abschnitten des Schaltelements und/ oder des Übertragungselements eine stabförmige Achse angeordnet, welche fluchtend zur ersten Rotationsachse anordenbar ist oder diese ausgestaltet.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1a, 1b: Darstellungen eines erfindungsgemäßen Fahrzeugsitzes;
- Fig. 2: eine Ausschnittsdarstellung einer Seitenansicht des erfindungsgemäßen Fahrzeugsitzes;
- Fig. 3a-3h: verschiedene Ansichten der Höhenverstelleinrichtung des erfindungsgemäßen Fahrzeugsitzes;
- Fig. 4: eine vereinfachte Ansicht der Höhenverstelleinrichtung des erfindungsgemäßen Fahrzeugsitzes;
- Fig. 5a-5c: verschiedene Ansichten einer Baugruppe der Höhenverstelleinrichtung.

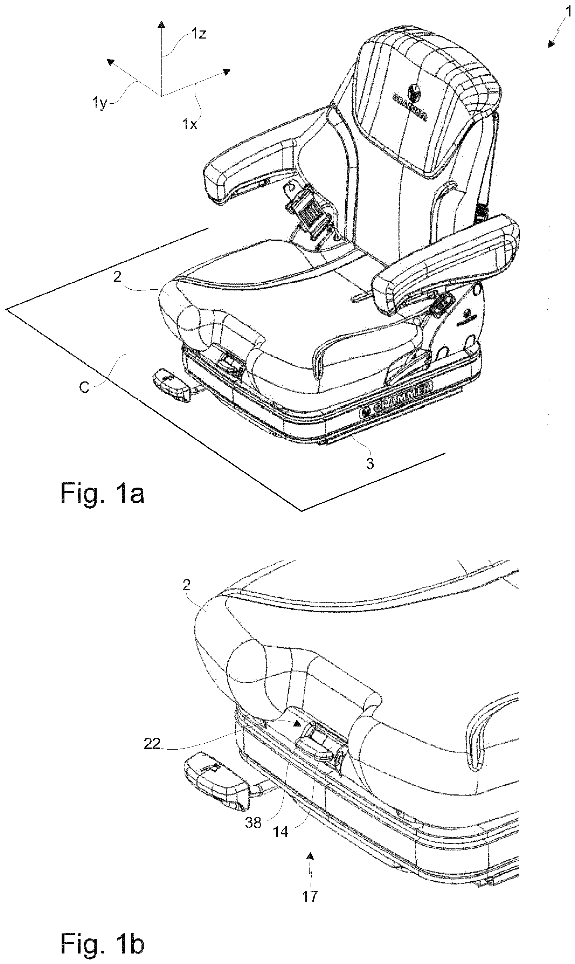

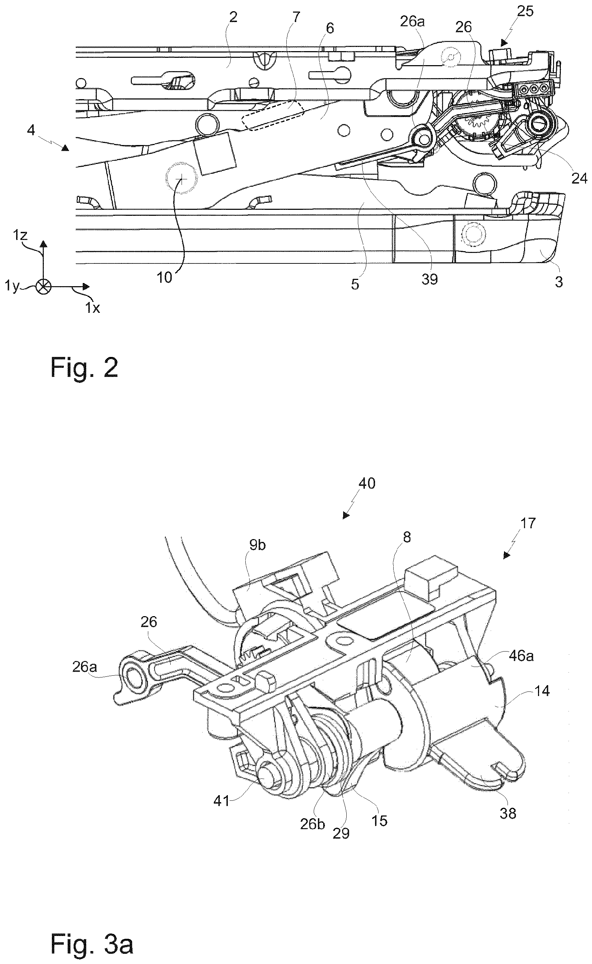

In der Fig. 1a ist eine perspektivische Ansicht eines erfindungsgemäßen Fahrzeugsitzes 1 (mit angedeuteter Fahrzeugkabine C) mit Fahrzeugsitzlängsrichtung 1x, Fahrzeugsitzbreitenrichtung 1y und Fahrzeugsitzhöhenrichtung 1z zu sehen. Dieser weist ein Oberteil 2 und ein Unterteil 3 auf, welche zueinander vorliegend mittels zweier höhenverstellbarer Scherengestelle 4 (siehe Fig. 2) federnd gelagert sind. Diese Scherengestelle 4 liegen sich in Fahrzeugsitzbreitenrichtung 1y gegenüber, so dass auf der linken und auf der rechten Seite des Fahrzeugsitzes 1 je ein Scherengestell 4 angeordnet ist.

Es sei erwähnt, dass die folgende Beschreibung auf einen Fahrzeugsitz 1 und dessen Oberteil 2 und Unterteil 3 gerichtet ist. Analog dazu wäre auch vorstellbar, dass eine Fahrerkabine C mit einem Oberteil und einem Unterteil beschrieben wäre.

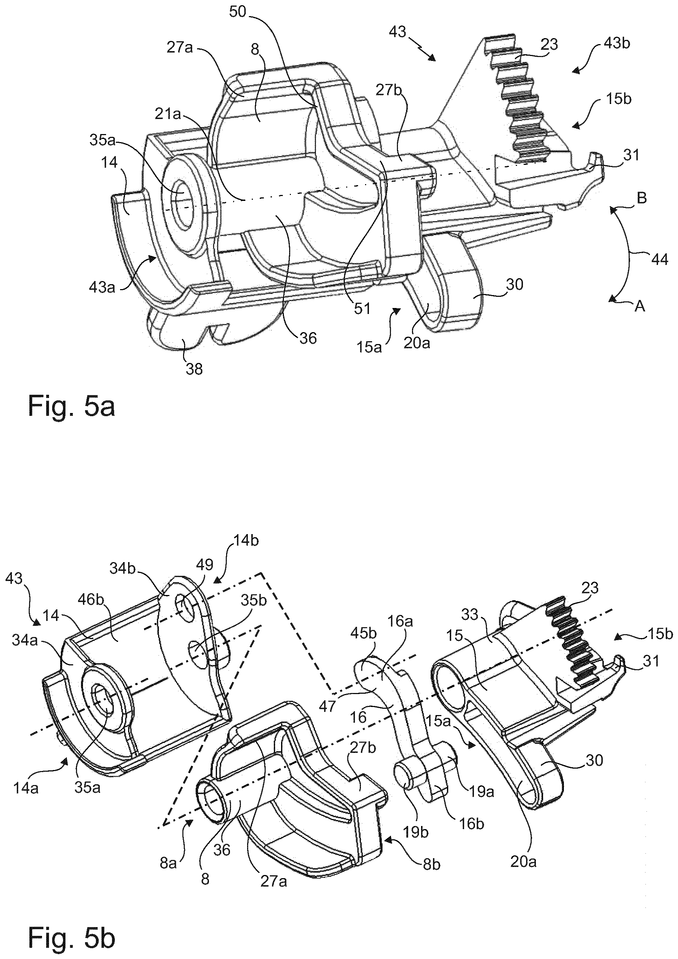

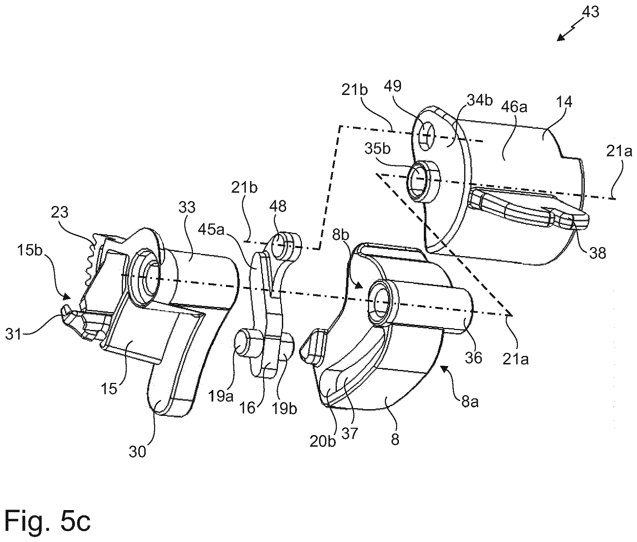

Gekennzeichnet ist der Fahrzeugsitz 1 durch eine Höhenverstelleinrichtung 17 für das Scherengestell 4, umfassend ein manuell betätigbares Steuerhebelelement 14 und ein damit mechanisch wirkverbundenes Führungselement 16 (siehe Fig. 5b und 5c). Das Steuerhebelelement 14 ist an einer Vorderseite 22 des Oberteils 2 des Fahrzeugsitzes 1 angeordnet und manuell um die erste Rotationsachse 21a (siehe Fig. 5a) verschwenkbar.

Vorliegend ist gemäß Fig. 1b ein Griffelement 38 des Steuerhebelelements 14 zu sehen, welches um die erste Rotationsachse 21a (siehe Fig. 5a) um einen Winkel von +/- 25° verschwenkbar ist. Mittels des gezeigten Fahrzeugsitzes 1 und der gezeigten Höhenverstelleinrichtung 17 ist vorliegend eine Höhenverstellung des Scherengestells 4 von maximal +/- 20 mm durchführbar.

Fig. 2 zeigt eine Seitenansicht des Fahrzeugsitzes 1, gemäß der die zwei um eine gemeinsame Achse 10 schwenkbaren Scherenarme 5, 6 des einen Scherengestells 4 auf der rechten Seite des Fahrzeugsitzes 1 zu sehen sind. Ebenfalls angedeutet ist die Position einer Luftfeder 7 mit einer veränderbaren Luftmenge, welche vorliegend zwischen dem Oberteil 2 und dem Scherenarm 6 angeordnet ist und mittels der das Oberteil 2 und das Unterteil 3 vertikal federnd gelagert sind.

Ferner zu sehen gemäß Fig. 2 ist ein Koppelstangenelement 26, welches mit einem ersten Ende 26a mit einem 6 der Scherenarme 5, 6 des Scherengestells 4 mechanisch verbunden ist. Vorliegend ist das erste Ende 26a über ein Hebelelement 39 mit dem Scherenarm 6 derart verbunden, dass das Koppelstangenelement 26 zum Hebelelement 39 rotationsfrei gelagert ist. Das Hebelelement 39 ist vorteilhaft ebenfalls zum Scherenarm 6 rotationsfrei gelagert.

Ferner ist ein Zahnrad 24 einer Bremseinheit 25 zu sehen, welches wie später noch näher erläutert mit einem Übertragungselement 15 wirkverbindbar ist.

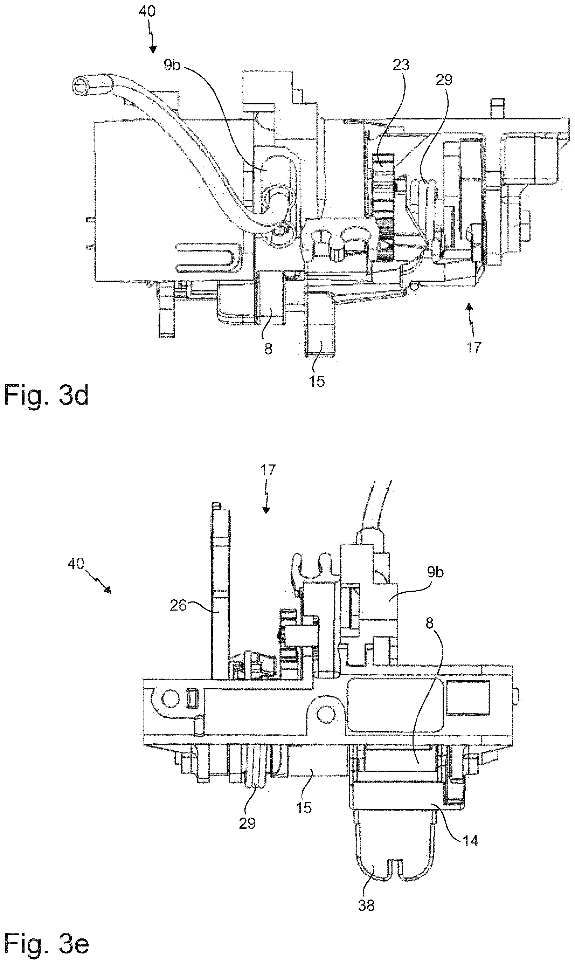

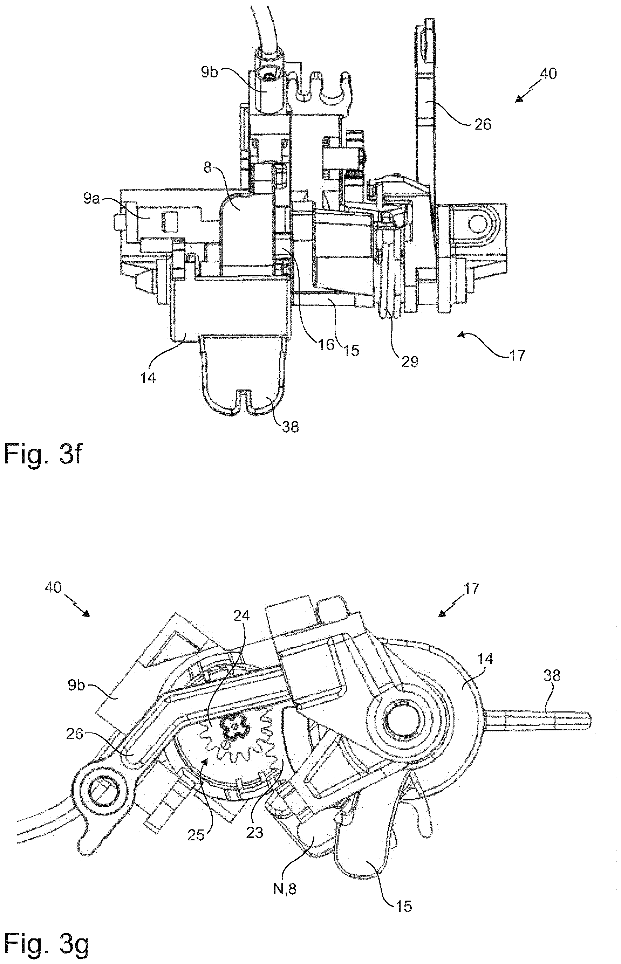

Die Figuren 3a bis 3h zeigen nun eine übergeordnete Baugruppe 40 und zumindest teilweise deren Komponenten bestehend aus Steuerhebelelement 14, Koppelstangenelement 26, Übertragungselement 15, Führungselement 16, Schaltelement 8, erstem Schalter 9a, zweitem Schalter 9b und Drehfederelement 29 (vorliegend als Schenkelfederelement ausgestaltet).

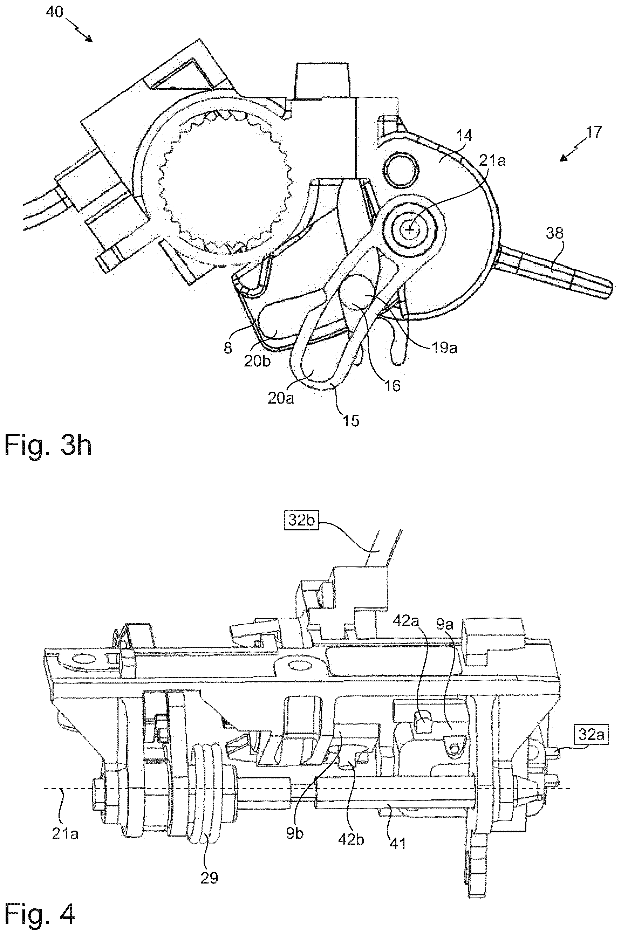

Das Koppelstangenelement 26 ist vorliegend mit seinem zweiten Ende 26b (siehe Fig. 3a) mittels des Drehfederelements 29 mit dem Übertragungselement 15 mechanisch wirkverbunden. Hierzu weist das zweite Ende 26b eine Bohrung auf und ist auf der Achse 41 (siehe Fig. 4) bzw. um die erste Rotationsachse 21a schwenkbar gelagert.

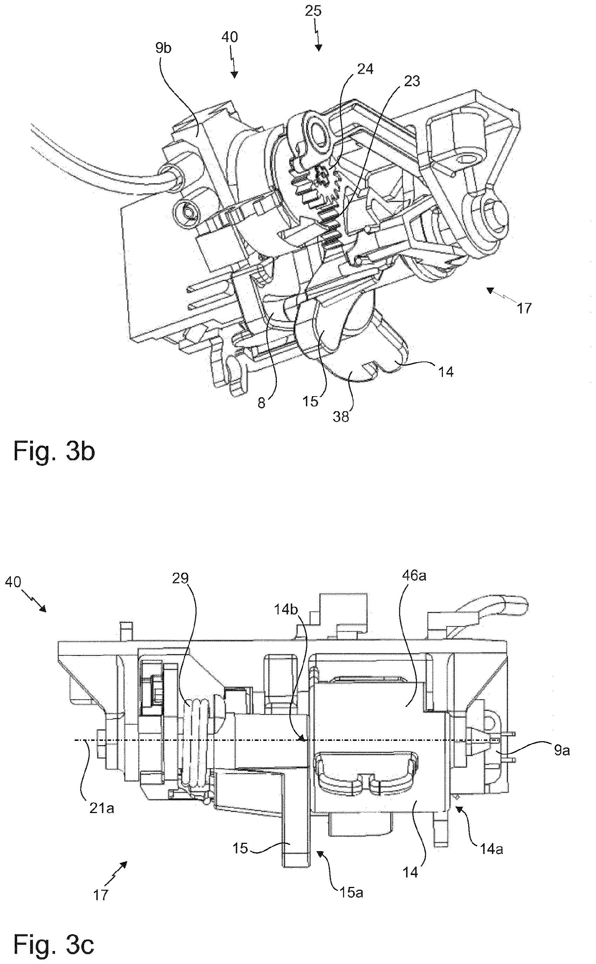

Die Fig. 3b, 3c und 3g zeigen insbesondere, dass das Übertragungselement 15 an einem zweiten Ende 15b einen mit dem Zahnrad 24 der Bremseinheit 25 mechanisch wirkverbindbaren außenverzahnten Abschnitt 23 aufweist.

Mittels des mit dem Scherengestell 4 mechanisch wirkverbundenen Übertragungselements 15 sind Bewegungen des Scherengestells 4 auf das gezeigte Schaltelement 8 zur Steuerung der Luftmenge der Luftfeder 7 übertragbar.

Die Fig. 3h zeigt die Anordnung des Führungselements 16, mittels welchem das Schaltelement 8 um die erste Rotationsachse 21a verschwenkbar ist und mittels welchem das Übertragungselement 15 um die erste Rotationsachse 21a zum Schaltelement 8 gegenläufig verschwenkbar ist, um eine zwischen zwei zur Steuerung einer Luftmenge der Luftfeder 7 vorgesehenen Schaltern 9a, 9b angeordnete Neutralposition N des Schaltelements 8 (siehe Fig. 3g) zu ändern. In dieser Darstellung gemäß Fig. 3h ist das Steuerhebelelement 14 nach unten ausgelenkt.

Fig. 4 zeigt aus Gründen der Übersichtlichkeit die Baugruppe 40 ohne Schaltelement 8, Übertragungselement 15, Führungselement 16 und Steuerhebelelement 14, so dass eine zwischen den Bohrungen 35a, 35b (siehe Fig. 5b, 5c) der Stirnflächenabschnitte 34a, 34b oder den hohlzylinderförmigen Abschnitten 36, 33 (siehe Fig. 5b, 5c) des Schaltelements 14 und/ oder des Übertragungselements 15 angeordnete stabförmige Achse 41 sichtbar ist, welche vorliegend die erste Rotationsachse 21a ausgestaltet. Mit dieser Achse 41 ist das Übertragungselement 15 bevorzugt drehbar verbunden. Hingegen ist die Achse 41 hinsichtlich einer Verschiebung in Richtung der Achse 41 gegenüber dem Übertragungselement 15 bevorzugt starr angeordnet.

Ebenfalls zu sehen in dieser Ansicht sind die Schalter 9a, 9b mit deren Betätigungselementen 42a, 42b.

Die Figuren 5a bis 5c zeigen eine Baugruppe 43, welche aus dem Schaltelement 8, dem Steuerhebelelement 14, dem Übertragungselement 15 und dem Führungselement 16 aufgebaut ist. Nicht dargestellt ist die stabförmige Achse 41.

Insbesondere da der hohlzylinderförmige Abschnitt 36 des Schaltelements 8 vollständig zwischen den beiden Stirnflächenabschnitten 34a, 34b des Steuerhebelelements 14 angeordnet ist (siehe Fig. 5a, Fig. 3c, Fig. 3e), ist die gesamte Baugruppe 43 sehr kompakt.

Abgesehen von den Enden der nicht gezeigten stabförmigen Achse 41 ist das erste Ende 43a der Baugruppe 43 mittels des Steuerhebelelements 14 ausgestaltet. Das in Richtung der ersten Rotationsachse 21a dem ersten Ende 43a abgewandte zweite Ende 43b der Baugruppe 43 ist abgesehen von den Enden der nicht gezeigten stabförmigen Achse 41 mittels des Übertragungselements 15 ausgestaltet.

In Bezug auf eine Richtung der ersten Rotationsachse 21a ist das zweite Ende 14b des Steuerhebelelements 14 fluchtend mit dem zweiten Ende 8b des Schaltelements 8 und mit einer zur Rotationsachse 21a senkrechten Fläche 45a des Führungselements 16, auf weleher das erste Nutensteinelement 19a angeordnet ist. Das zweite Nutensteinelement 19b ist vorliegend auf einer der Fläche 45a des Führungselements 16 gegenüberliegenden Fläche 45b angeordnet, welche ebenfalls zur Rotationsachse 21a senkrecht angeordnet ist.

Vorliegend ist das Führungselement 16 über eine an einem ersten Ende 16a des Führungselements 16 angeordnete und zur ersten Rotationsachse 21a parallelen zweiten Rotationsachse 21b mit dem Steuerhebelelement 14 schwenkbar verbunden (siehe Fig. 5b und 5c).

Eine Verlängerung 47 der Fläche 45b des Führungselements 16 (siehe Fig. 5b) bildet gleichzeitig eine Plattform aus, auf der eine kreisförmige Erhebung 48 angeordnet ist (siehe Fig. 5c). Diese ist dazu ausgebildet, in einer Bohrung 49 auf dem Stirnflächenabschnitt 34b des Steuerhebelelements 14 angeordnet zu sein. Dazu wird die kreisförmige Erhebung 48 von der Innenseite des Steuerhebelelements 14 (welcher die innere Mantelfläche 46b zugewandt ist und mittels der Fig. 5b gezeigt ist) in die Bohrung 49 eingeführt.

Sowohl eine Mittelachse der Bohrung 49 als auch eine Mittelachse der Erhebung 48 fluchten dabei mit der zweiten Rotationsachse 21b.

Das zweite Ende 14b des Steuerhebelelements 14 ist vorliegend direkt benachbart zum ersten Ende 15a des Übertragungselements 15 angeordnet (siehe Fig. 3c).

Das Führungselement 16 weist an einem zweiten Ende 16b ein sich jeweils in Richtung der zweiten Rotationsachse 21b und damit in Richtung der ersten Rotationsachse 21a erstreckendes erstes 19a und zweites Nutensteinelement 19b auf.

Das erste Nutensteinelement 19a ist dabei in einer ersten bogenförmigen Nut 20a des Übertragungselements 15 führbar. Das zweite Nutensteinelement 19b ist in einer zweiten bogenförmigen Nut 20b des Schaltelements 8 führbar. Bevorzugt sind die Nutensteinelemente 19a, 19b über ihre gesamte Ausdehnung in Richtung der zweiten Rotationsachse 21b innerhalb der Nuten 20a, 20b angeordnet, was die Kompaktheit und die mechanische Sicherheit der Anordnung nochmals erhöht.

Eine Krümmung der ersten Nut 20a ist dabei gegenläufig zu einer Krümmung der zweiten Nut 20b angeordnet. Dies ist beispielsweise anhand der Ansicht in Fig. 3g veranschaulicht, gemäß der ausgehend vom ersten Nutensteinelement 19a ein Verlauf der ersten Nut 20a nach rechts und ein Verlauf der zweiten Nut 20b nach links ausgestaltet ist.

Das Übertragungselement 15 weist an einem ersten Ende 15a einen Nutabschnitt 30 mit der nach außen weisenden ersten Nut 20a auf. An einem zweiten Ende 15b des Übertragungselements 15 ist ein mit dem Zahnrad 24 der Bremseinheit 25 mechanisch wirkverbindbarer außenverzahnter Abschnitt 23 angeordnet. Ferner ist ein Abschnitt 31 zur Lagerung eines Endes des Drehfederelements 29 angeordnet.

Zwischen den beiden Enden 15a, 15b des Übertragungselements 15 ist ein im Wesentlichen hohlzylinderförmiger Abschnitt 33 angeordnet, welcher konzentrisch zur ersten Rotationsachse 21a anordenbar ist.

Das Steuerhebelelement 14 ist im Wesentlichen in Form eines Segments eines schalenförmigen Hohlzylinders mit sich gegenüberliegenden Stirnflächenabschnitten 34a, 34b am ersten 14a bzw. zweiten Ende 14b ausgestaltet. Jeweils eine Bohrung 35a, 35b in den Stirnflächenabschnitten 34a, 34b ist dabei konzentrisch zur ersten Rotationsachse 21a anordenbar.

An einer Außenseite des Steuerhebelelements 14, vorliegend an einer äußeren Mantelfläche 46a des Hohlzylinders, ist ein hinsichtlich seiner flächigen Ausgestaltung senkrecht zur ersten Rotationsachse 21a angeordnetes Griffelement 38 angeordnet. Bevorzugt ist die äußere Mantelfläche 46a am zweiten Ende 14b des Steuerhebelelements 14 hinsichtlich ihrer Ausdehnung in Richtung der ersten Rotationsachse 21a durch den Stirnflächenabschnitt 34b begrenzt. Weiterhin bevorzugt ist die äußere Mantelfläche 46a am ersten Ende 14a des Steuerhebelelements 14 hinsichtlich ihrer Ausdehnung in Richtung der ersten Rotationsachse 21a durch den Stirnflächenabschnitt 34a nicht begrenzt, sondern erstreckt sich auf beiden Seiten des Stirnflächenabschnitts 34a.

Ebenfalls ist gemäß Fig. 5b die innere Mantelfläche 46b gezeigt, welche vorliegend durch die Schalenform des Steuerhebelelements 14 resultiert.

Ein Doppelpfeil 44 mit Richtungen A und B kennzeichnet die Richtungen, in die das Schaltelement 8 zur Betätigung der Schalter 9a, 9b verschwenkbar ist.

Ausgehend von einer gemäß Fig. 3g gezeigten Neutralposition N des Schaltelements 8 ist mittels einer Verschwenkbewegung des Schaltelements 8 um die erste Rotationsachse 21a in eine erste Richtung A der erste Schalter 9a zur Ansteuerung einer Luftzuführeinrichtung 32a (siehe Fig. 4) der Luftfeder 7 betätigbar.

Analog dazu ist ausgehend von der Neutralposition N des Schaltelements 8 mittels einer Verschwenkbewegung des Schaltelements 8 um die erste Rotationsachse 21a in eine zweite Richtung B der zweite Schalter 9b zur Ansteuerung einer Luftabführeinrichtung 32b (siehe Fig. 4) der Luftfeder 7 betätigbar.

Insbesondere aus der Fig. 5a entnimmt man die Position einer ersten 27a und einer zweiten Schaltfläche 27b des Schaltelements 8. Mittels der ersten Schaltfläche 27a ist der erste Schalter 9a, insbesondere dessen Betätigungselement 42a, und mittels der zweiten Schaltfläche 27b ist der zweite Schalter 9b, insbesondere dessen Betätigungselement 42b, betätigbar.

An einem zweiten Ende 8b des Schaltelements 8 ist ein Nutabschnitt 28 mit der nach außen weisenden zweiten Nut 20b angeordnet. Zwischen dem zweiten Ende 8b und einem ersten Ende 8a des Schaltelements 8 ist ein im Wesentlichen zylinderförmiger Abschnitt 36 des Schaltelements 8 angeordnet, welcher konzentrisch zur ersten Rotationsachse 21a anordenbar ist.

Dabei ist die erste Schaltfläche 27a sich ausgehend vom ersten Ende 8a des Schaltelements 8 erstreckend angeordnet. In Richtung zum zweiten Ende 8b des Schaltelements 8 hinweisend ist die erste Schaltfläche 27a durch einen Absatz 50 (siehe Fig. 5a) begrenzt.

Die zweite Schaltfläche 27b ist am zweiten Ende 8b angeordnet und sich senkrecht zu einer Ebene 37, innerhalb der die zweite Nut 20b sich erstreckend angeordnet ist, erstreckend angeordnet. Dabei ist die zweite Schaltfläche 27b mittels einer verbreiterten Fläche 51 ausgestaltet, welche auf der dem ersten Ende 8a zugewandten Seite durch den Absatz 50 begrenzt ist.

### Bezugszeichenliste

- 1: Fahrzeugsitz
- 1x: Längsrichtung
- 1y: Breitenrichtung
- 1z: Höhenrichtung
- 2: Oberteil
- 3: Unterteil
- 4: Scherengestell
- 5, 6: Scherenarm
- 7: Luftfeder
- 8: Schaltelement
- 8a, 8b: Ende
- 9a, 9b: Schalter
- 10: Achse
- 14: Steuerhebelelement
- 14a, 14b: Ende
- 15: Übertragungselement
- 15a, 15b: Ende
- 16: Führungselement
- 16a, 16b: Ende
- 17: Höhenverstelleinrichtung
- 19a, 19b: Nutensteinelement
- 20a, 20b: Nut
- 21a, 21b: Rotationsachse
- 22: Kante
- 23: Abschnitt
- 24: Zahnrad
- 25: Bremseinheit
- 26: Koppelstangenelement
- 26a, 26b: Ende
- 27a, 27b: Schaltfläche
- 28, 30: Nutabschnitt
- 29: Drehfederelement
- 31, 33, 36: Abschnitt
- 32a: Luftzuführeinrichtung
- 32b: Luftabführeinrichtung
- 34a, 34b: Stirnflächenabschnitt
- 35a, 35b: Bohrung
- 37: Ebene
- 38: Griffelement
- 39: Hebelelement
- 40,43: Baugruppe
- 41: Achse
- 42a, 42b: Betätigungselement
- 44: Doppelpfeil
- 45a, 45b, 51: Fläche
- 46a, 46b: Mantelfläche
- 47: Verlängerung
- 48: Erhebung
- 49: Bohrung
- 50: Absatz
- A, B: Richtung
- C: Fahrzeugkabine
- N: Neutralposition

## Patentansprüche

1. Fahrzeugkabine (C) oder Fahrzeugsitz (1) mit einem Oberteil (2) und einem Unterteil (3), welche zueinander mittels mindestens eines höhenverstellbaren Scherengestells (4) mit zwei um eine gemeinsame Achse (10) schwenkbaren Scherenarmen (5, 6) und mindestens einer Luftfeder (7) mit einer veränderbaren Luftmenge vertikal federnd gelagert sind, wobei mittels eines mit dem Scherengestell (4) mechanisch wirkverbundenen Übertragungselements (15) Bewegungen des Scherengestells (4) auf ein Schaltelement (8) zur Steuerung der Luftmenge der Luftfeder (7) übertragbar sind,
**gekennzeichnet durch**
eine Höhenverstelleinrichtung (17) für das Scherengestell (4), umfassend ein manuell betätigbares Steuerhebelelement (14) und ein damit mechanisch wirkverbundenes Führungselement (16), wobei mittels des Führungselements (16) das Schaltelement (8) um eine erste Rotationsachse (21a) verschwenkbar ist und das Übertragungselement (15) um die erste Rotationsachse (21a) zum Schaltelement (8) gegenläufig verschwenkbar ist, um eine zwischen zwei zur Steuerung einer Luftmenge der Luftfeder (7) vorgesehenen Schaltern (9a, 9b) angeordnete Neutralposition (N) des Schaltelements (8) zu ändern.

2. Fahrzeugkabine (C) oder Fahrzeugsitz (1) nach Anspruch 1,
**dadurch gekennzeichnet, dass**
das Führungselement (16) über eine an einem ersten Ende (16a) des Führungselements (16) angeordnete und zur ersten Rotationsachse (21a) parallelen zweiten Rotationsachse (21b) mit dem Steuerhebelelement (14) schwenkbar verbunden ist und/ oder an einem zweiten Ende (16b) ein sich in Richtung der zweiten Rotationsachse (21b) erstreckendes erstes (19a) und zweites Nutensteinelement (19b) aufweist.

3. Fahrzeugkabine (C) oder Fahrzeugsitz (1) nach Anspruch 2,
**dadurch gekennzeichnet, dass**
das erste Nutensteinelement (19a) in einer ersten bogenförmigen Nut (20a) des Übertragungselements (15) und das zweite Nutensteinelement (19b) in einer zweiten bogenförmigen Nut (20b) des Schaltelements (8) führbar ist, wobei eine Krümmung der ersten Nut (20a) gegenläufig zu einer Krümmung der zweiten Nut (20b) angeordnet ist.

4. Fahrzeugkabine (C) oder Fahrzeugsitz (1) nach einem der vorhergehenden Ansprüche,
**dadurch gekennzeichnet, dass**
ein Koppelstangenelement (26) mit einem ersten Ende (26a) mit einem (6) der Scherenarme (5, 6) des Scherengestells (4) und/ oder mit einem zweiten Ende (26b) mittels eines Drehfederelements (29) mit dem Übertragungselement (15) mechanisch wirkverbunden ist.

5. Fahrzeugkabine (C) oder Fahrzeugsitz (1) nach einem der vorhergehenden Ansprüche,
**dadurch gekennzeichnet, dass**
das Übertragungselement (15) an einem ersten Ende (15a) einen Nutabschnitt (30) mit der ersten Nut (20a) und/ oder an einem zweiten Ende (15b) einen mit einem Zahnrad (24) einer Bremseinheit (25) mechanisch wirkverbindbaren außenverzahnten Abschnitt (23) und einen Abschnitt (31) zur Lagerung eines Endes des Drehfederelements (29) aufweist, wobei zwischen den beiden Enden (15a, 15b) des Übertragungselements (15) ein im Wesentlichen zylinderförmiger Abschnitt (33) angeordnet ist, welcher konzentrisch zur ersten Rotationsachse (21a) anordenbar ist.

6. Fahrzeugkabine (C) oder Fahrzeugsitz (1) nach einem der vorhergehenden Ansprüche,
**dadurch gekennzeichnet, dass**
das Steuerhebelelement (14) an einer Vorderseite (22) des Oberteils (2) des Fahrzeugsitzes (1) oder der Fahrzeugkabine (C) angeordnet und manuell um die erste Rotationsachse (21a) verschwenkbar ist.

7. Fahrzeugkabine (C) oder Fahrzeugsitz (1) nach einem der vorhergehenden Ansprüche,
**dadurch gekennzeichnet, dass**
das Steuerhebelelement (14) im Wesentlichen in Form eines Segments eines schalenförmigen Hohlzylinders mit sich gegenüberliegenden Stirnflächenabschnitten (34a, 34b) ausgestaltet ist, wobei jeweils eine Bohrung (35a, 35b) in den Stirnflächenabschnitten (34a, 34b) konzentrisch zur ersten Rotationsachse (21a) anordenbar ist, und/ oder dass an einer Außenseite des Steuerhebelelements(14) ein senkrecht zur ersten Rotationsachse (21a) angeordnetes Griffelement (38) angeordnet ist.

8. Fahrzeugkabine (C) oder Fahrzeugsitz (1) nach einem der vorhergehenden Ansprüche,
**dadurch gekennzeichnet, dass**
ausgehend von der Neutralposition (N) des Schaltelements (8) mittels einer Verschwenkbewegung des Schaltelements (8) um die erste Rotationsachse (21a) in eine erste Richtung (A) der erste Schalter (9a) zur Ansteuerung einer Luftzuführeinrichtung (32a) der Luftfeder (7) und mittels einer Verschwenkbewegung des Schaltelements (8) um die erste Rotationsachse (21a) in eine zweite Richtung (B) der zweite Schalter (9b) zur Ansteuerung einer Luftabführeinrichtung (32b) der Luftfeder (7) betätigbar ist.

9. Fahrzeugkabine (C) oder Fahrzeugsitz (1) nach einem der vorhergehenden Ansprüche,
**dadurch gekennzeichnet, dass**
mittels einer ersten Schaltfläche (27a) des Schaltelements (8) der erste Schalter (9a) und mittels einer zweiten Schaltfläche (27b) des Schaltelements (8) der zweite Schalter (9b) betätigbar ist, wobei an einem zweiten Ende (8b) des Schaltelements (8) ein Nutabschnitt (28) mit der zweiten Nut (20b) angeordnet ist, wobei zwischen dem zweiten Ende (8b) und einem ersten Ende (8a) des Schaltelements (8) ein im Wesentlichen zylinderförmiger Abschnitt (36) angeordnet ist, welcher konzentrisch zur ersten Rotationsachse (21a) anordenbar ist, und/ oder wobei die erste Schaltfläche (27a) sich zwischen dem ersten (8a) und dem zweiten Ende (8b) des Schaltelements (8) und die zweite Schaltfläche (27b) am ersten Ende (8a) sich senkrecht zu einer Ebene (37), innerhalb der die zweite Nut (20b) sich erstreckend angeordnet ist, erstreckend angeordnet ist.

10. Fahrzeugkabine (C) oder Fahrzeugsitz (1) nach einem der vorhergehenden Ansprüche,
**dadurch gekennzeichnet, dass**
das Griffelement (38) um die erste Rotationsachse (21a) um einen Winkel von +/- 25° verschwenkbar ist und/oder mittels der Höhenverstelleinrichtung (17) eine Höhenverstellung des Scherengestells (4) von maximal +/- 20 mm durchführbar ist.

## Claims

1. Vehicle cab (C) or vehicle seat (1) comprising an upper part (2) and a lower part (3) which are vertically spring-mounted relative to one another by means of at least one height-adjustable scissor-action frame (4) comprising two scissor arms (5, 6) which are pivotable about a common axis (10), and at least one air spring (7) having a variable air volume, it being possible for movements of the scissor-action frame (4) to be transmitted to a switching element (8), by means of a transmission element (15) that is mechanically operatively connected to the scissor-action frame (4), in order to control the air volume of the air spring (7),
**characterised by**
a height-adjustment device (17) for the scissor-action frame (4), comprising a manually actuable control lever element (14) and a guide element (16) that is mechanically operatively connected thereto, the switching element (8) being able to be pivoted about a first axis of rotation (21a) and the transmission element (15) being able to be pivoted about the first axis of rotation (21a) in the opposite direction to the switching element (8) by means of the guide element (16), in order to change a neutral position (N) of the switching element (8) that is between two switches (9a, 9b) provided for controlling an air volume of the air spring (7).

2. Vehicle cab (C) or vehicle seat (1) according to claim 1,
**characterised in that**
the guide element (16) is pivotably connected to the control lever element (14) by means of a second axis of rotation (21b) that is arranged at a first end (16a) of the guide element (16) and is in parallel with the first axis of rotation (21a), and/or comprises, at a second end (16b), a first (19a) and second slot nut element (19b) that extend in the direction of the second axis of rotation (21b).

3. Vehicle cab (C) or vehicle seat (1) according to claim 2,
**characterised in that**
the first slot nut element (19a) can be guided in a first curved slot (20a) of the transmission element (15), and the second slot nut element (19b) can be guided in a second curved slot (20b) of the switching element (8), a curvature of the first slot (20a) being in the opposite direction to a curvature of the second slot (20b).

4. Vehicle cab (C) or vehicle seat (1) according to any of the preceding claims,
**characterised in that**
a coupling rod element (26) is mechanically operatively connected, at a first end (26a), to one (6) of the scissor arms (5, 6) of the scissor-action frame (4) and/or, at a second end (26b), to the transmission element (15), by means of a torsion spring element (29).

5. Vehicle cab (C) or vehicle seat (1) according to any of the preceding claims,
**characterised in that**
a first end (15a) of the transmission element (15) comprises a slot portion (30) comprising the first slot (20a), and/or a second end (15b) of said transmission element comprises an externally toothed portion (23) that can be mechanically operatively connected to a gear (24) of a brake unit (25), and a portion (31) for mounting an end of the torsion spring element (29), a substantially hollow cylindrical portion (33) being arranged between the two ends (15a, 15b) of the transmission element (15), which portion can be arranged concentrically to the first axis of rotation (21a).

6. Vehicle cab (C) or vehicle seat (1) according to any of the preceding claims,
**characterised in that**
the control lever element (14) is arranged on a front face (22) of the upper part (2) of the vehicle seat (1) or of the vehicle cab (C) and can be manually pivoted about the first axis of rotation (21a).

7. Vehicle cab (C) or vehicle seat (1) according to any of the preceding claims,
**characterised in that**
the control lever element (14) is substantially in the shape of a segment of a bowlshaped hollow cylinder having opposing end face portions (34a, 34b), it being possible for a hole (35a, 35b) to be arranged in the end face portions (34a, 34b), concentrically to the first axis of rotation (21a), respectively, and/or **in that** a gripping element (38) that is perpendicular to the first axis of rotation (21a) is arranged on an outer face of the control lever element (14).

8. Vehicle cab (C) or vehicle seat (1) according to any of the preceding claims,
**characterised in that**
proceeding from the neutral position (N) of the switching element (8), the first switch (9a) can be actuated, in order to actuate an air supply device (32a) of the air spring (7), by means of a pivoting movement of the switching element (8) in a first direction (A) about the first axis of rotation (21a), and the second switch (9b) can be actuated, in order to actuate an air discharge device (32b) of the air spring (7), by means of a pivoting movement of the switching element (8) in a second direction (B) about the first axis of rotation (21a).

9. Vehicle cab (C) or vehicle seat (1) according to any of the preceding claims,
**characterised in that**
the first switch (9a) can be actuated by means of a first switching surface (27a) of the switching element (8), and the second switch (9b) can be actuated by means of a second switching surface (27b) of the switching element (8), a slot portion (28) comprising the second slot (20b) being arranged at a second end (8b) of the switching element (8) and a substantially cylindrical portion (36) being arranged between the second end (8b) and a first end (8a) of the switching element (8), which portion can be arranged concentrically to the first axis of rotation (21a), and/or the first switching surface (27a) extending between the first (8a) and the second end (8b) of the switching element (8), and the second switching surface (27b) extending, at the first end (8a), perpendicularly to a plane (37) in which the second slot (20b) extends.

10. Vehicle cab (C) or vehicle seat (1) according to any of the preceding claims,
**characterised in that**
the gripping element (38) can be pivoted about the first axis of rotation (21a) by an angle of +/- 25° and/or the height-adjustment device (17) can adjust the height of the scissor-action frame (4) by at most +/- 20 mm.

## Revendications

1. Cabine de véhicule (C) ou siège de véhicule (1) comportant une partie supérieure (2) et une partie inférieure (3), lesquelles sont montées élastiquement verticalement l'une par rapport à l'autre au moyen d'au moins un châssis à ciseaux (4) réglable en hauteur, comportant deux branches de ciseaux (5, 6) aptes à pivoter autour d'un axe commun (10) et au moins un ressort pneumatique (7) comportant une quantité variable d'air, des mouvements du châssis à ciseaux (4) étant aptes à être transmis à un élément de commutation (8), au moyen d'un élément de transmission (5) en liaison mécanique active avec le châssis à ciseaux (4), pour la commande de la quantité d'air du ressort pneumatique (7),
caractérisé(e) par
un dispositif (17) de réglage en hauteur pour le châssis à ciseaux (4), comportant un élément levier de commande (14) actionnable manuellement et un élément de guidage (16) en liaison mécanique active avec lui, où, au moyen de l'élément de guidage (16), l'élément de commutation (8) est apte à pivoter autour d'un premier axe de rotation (21a) et l'élément de transmission (15) est apte à pivoter autour du premier axe de rotation (21a) dans la direction opposée à l'élément de commutation (8), pour changer une position neutre (N) de l'élément de commutation (8) disposée entre deux commutateurs (9a, 9b) prévus pour la commande d'une quantité d'air du ressort pneumatique (7).

2. Cabine de véhicule (C) ou siège de véhicule (1) selon la revendication 1,
caractérisé(e) par le fait que
l'élément de guidage (16) est relié de façon pivotante à l'élément levier de commande (14) au moyen d'un second axe de rotation (21b) disposé à une première extrémité (16a) de l'élément de guidage (16) et parallèle au premier axe de rotation (21a) et/ou présente, à une seconde extrémité (16b), un premier (19a) et un second élément coulisseau (19b) s'étendant dans la direction du second axe de rotation (21b).

3. Cabine de véhicule (C) ou siège de véhicule (1) selon la revendication 2,
caractérisé(e) par le fait que
le premier élément coulisseau (19a) est apte à être guidé dans une première rainure (20a) en forme d'arc de l'élément de transmission (15) et le second élément coulisseau (19b) est apte à être guidé dans une seconde rainure (20b) en forme d'arc de l'élément de commutation (8), une courbure de la première rainure (20a) étant disposée dans la direction opposée à une courbure de la seconde rainure (20b).

4. Cabine de véhicule (C) ou siège de véhicule (1) selon l'une des revendications précédentes,
caractérisé(e) par le fait qu'
un élément tige de couplage (26) est en liaison mécanique active, à une première extrémité (26a), à l'une (6) des branches de ciseaux (5, 6) du châssis à ciseaux (4) et/ou, à une seconde extrémité (26b), à l'élément de transmission (15), au moyen d'un élément ressort de torsion (29).

5. Cabine de véhicule (C) ou siège de véhicule (1) selon l'une des revendications précédentes,
caractérisé(e) par le fait que
l'élément de transmission (15) présente, à une première extrémité (15a), une section de rainure (30) comprenant la première rainure (20a) et/ou, à une seconde extrémité (15b), une section dentée extérieurement (23) apte à être en liaison mécanique avec une roue dentée (24) d'une unité de freinage (25) et une section (31) pour le montage d'une extrémité de l'élément ressort de torsion (29), une section de forme sensiblement cylindrique (33) étant disposée entre les deux extrémités (15a, 15b) de l'élément de transmission (15), laquelle section (33) est apte à être disposée concentriquement au premier axe de rotation (21a).

6. Cabine de véhicule (C) ou siège de véhicule (1) selon l'une des revendications précédentes,
caractérisé(e) par le fait que
l'élément levier de commande (14) est disposé sur un côté avant (22) de la partie supérieure (2) du siège de véhicule (1) ou de la cabine de véhicule (C) et est apte à pivoter manuellement autour du premier axe de rotation (21a).

7. Cabine de véhicule (C) ou siège de véhicule (1) selon l'une des revendications précédentes,
caractérisé(e) par le fait que
l'élément levier de commande (14) est conçu sensiblement sous forme d'un segment d'un cylindre creux en forme de coque ayant des sections de face d'extrémité opposées (34a, 34b), un alésage (35a, 35b) étant apte à être disposé dans chacune des sections de face d'extrémité (34a, 34b) concentriquement au premier axe de rotation (21a), et/ou par le fait qu'un élément de saisie (38) disposé perpendiculairement au premier axe de rotation (21a) est disposé sur un côté externe de l'élément levier de commande (14).

8. Cabine de véhicule (C) ou siège de véhicule (1) selon l'une des revendications précédentes,
caractérisé(e) par le fait qu'
à partir de la position neutre (N) de l'élément de commutation (8), le premier commutateur (9a) est apte à être actionné pour la commande d'un dispositif d'alimentation en air (32a) du ressort pneumatique (7) au moyen d'un mouvement de pivotement de l'élément de commutation (8), dans une première direction (A) autour du premier axe de rotation (21a), et le second commutateur (9b) est apte à être actionné pour la commande d'un dispositif d'évacuation d'air (32b) du ressort pneumatique (7) au moyen d'un mouvement de pivotement de l'élément de commutation (8) dans une seconde direction (B) autour du premier axe de rotation (21a).

9. Cabine de véhicule (C) ou siège de véhicule (1) selon l'une des revendications précédentes,
caractérisé(e) par le fait que
le premier commutateur (9a) est apte à être actionné au moyen d'une première face de commutation (27a) de l'élément de commutation (8) et le second commutateur (9b) est apte à être actionné au moyen d'une seconde face de commutation (27b) de l'élément de commutation (8), une section de rainure (28) comprenant la seconde rainure (20b) étant disposée à une seconde extrémité (8b) de l'élément de commutation (8), une section de forme sensiblement cylindrique (36) étant disposée entre la seconde extrémité (8b) et une première extrémité (8a) de l'élément de commutation (8), laquelle section (36) est apte à être disposée concentriquement au premier axe de rotation (21a), et/ou la première face de commutation (27a) s'étendant entre la première (8a) et la seconde extrémité (8b) de l'élément de commutation (8) et la seconde face de commutation (27b) s'étendant, à la première extrémité (8a), perpendiculairement à un plan (37) dans lequel la seconde rainure (20b) s'étend.

10. Cabine de véhicule (C) ou siège de véhicule (1) selon l'une des revendications précédentes,
caractérisé(e) par le fait que
l'élément de saisie (38) est apte à pivoter autour du premier axe de rotation (21a) d'un angle de +/- 25° et/ou un réglage en hauteur du châssis à ciseaux (4) est apte à être effectué de +/- 20 mm au maximum au moyen du dispositif de réglage en hauteur (17).
